# EUROPÄISCHE PATENTANMELDUNG

(11) **EP 0 764 746 A1**
(43) Veröffentlichungstag der Anmeldung: **26.03.1997**
(21) Anmeldenummer: 95810551.2
(22) Anmeldetag: 05.09.1995
(51) Int. Cl.: E04C 2/12

(54) **Vollholzbauelement zur Herstellung flächiger Konstruktionen**

(71) Anmelder: Zenger, Alfred, 3800 Unterseen/Interlaken (CH)
(72) Erfinder: Zenger, Alfred, 3800 Unterseen/Interlaken (CH)

(57) **Zusammenfassung**

Das Massivholzbauelement (1) besteht aus Lamellen (2) die mit Nägel oder Schrauben (3) mechanisch miteinander starr verbunden sind.
Die Lamellen sind als Bretter (2) ausgeführt und können in der Länge ganz, oder versetzt (4) gestossen sein.
Die Massivholzbauelemente (1) können stumpf gestossen (5), verbunden in Nut und Kamm (7) oder durch Ueberlappung (6) , seitlich aneinandergereit werden.

## Beschreibung

Die vorliegende Erfindung betrifft ein Massivholzbauelement für die Herstellung von flächigen Konstruktionen, insbesondere zur Bildung von Massivholzdecken und Wände.

Es ist bekannt, als Massivholzbauelemente Pat.Nr. EP-0-214-088-A1 und Pat.Nr. CH-663-980-A5 durch verleimen der Lamellen oder ein kastenförmiges verleimtes Element zu benützen.
Ein Nachteil der verleimten Elemente ist die kostspielige und arbeitsaufwendige Herstellung und die nicht receiclebaren Ausgangsmaterialien, durch die Verwendung von umweltschädigenden Leimen.
Eine umweltgerechtere und weniger aufwendige Herstellung ist durch unbelastetes Holz und mit mechanischen Verbindungen möglich.
Ein weiterer Nachteil besteht darin, dass für die Herstellung von verleimten Elementen eine gute Holzqualität sehr wichtig ist.
Die Aufgabe dieser Erfindung ist es, ein vorfabrizierbares Massivholzbauelement zu schaffen, das mit sehr einfachen und umweltfreundlichen Materialien ohne aufwendige Produktionsverfahren hergestellt wird. Der Vorteil deiser Erfindung besteht darin, dass Holz mit minderer Qualität, wie sie z.B. aus Berg- und Lawinschutzwäldern kommen, verwendet wird, und somit eine bessere Nutzung und Pflege der lebenswichtigen Bergwaldgebiete fördert.

Die Aufgabe wird dadurch gelöst, dass Holzlamellen (2) Stück für Stück der Länge nach aneinandergereit werden und mit Nägel oder Schrauben (3) starr miteinander verbunden werden.
Dabei werden auch Reststücke verwendet, die kürzer als das zu produzierende Element sind, indem die Stösse (4) versetzt zueinander platziert werden. (wenig Verschnitt des Ausgangsmaterials).
Die Elementabmessungen werden den jeweiligen Spannweiten und Gegebenheiten des Objekts angepasst.
Da die Massivholzbauelemente (1) am fertigen Bauobjekt meistens nicht sichtbar sind, können die Holzlamellen (2) mit II bis III Klassigem Erscheinungsbild eingesetzt werden, wobei eine verfärbung des Holzes keine Rolle spielt.
Massivholzbauelemente werden in einem Holverarbeitenden Betrieb vorfabriziert und mit Lastwagen auf die Baustelle geführt. Am Bau werden die Element mit dem Kran grossflächig versetzt.

Nachstehend werden die beiligenden Zeichnungen zu der Erfindung erläutert.
Fig. 1.) Zeigt ein Element mit der Anordnung der Lamellen (2) und die mechanische Verbindung mit Nägel oder Schrauben.
Fig. 2,3,4 ) Zeigen die verschiedenen Zusammenschlüsse der einzelenen Elemente.

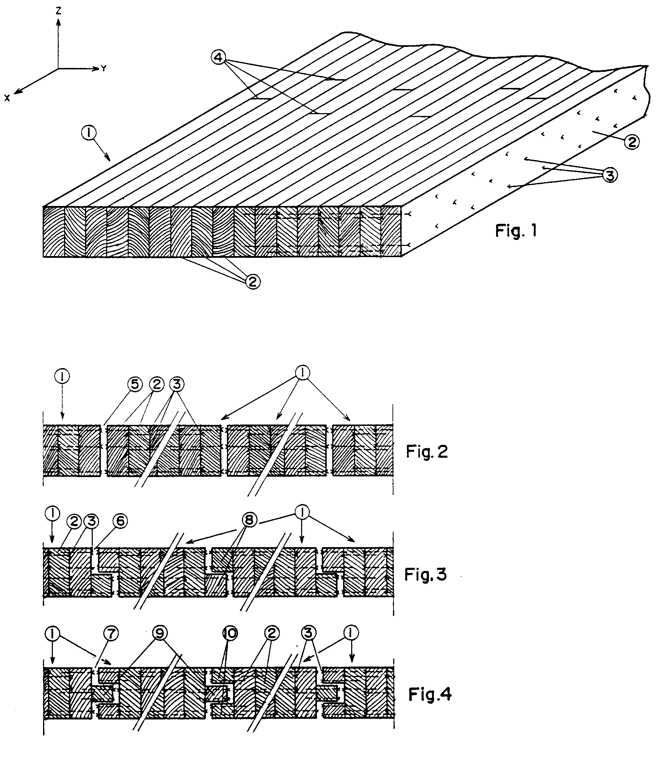

Fig. 2.) Stumpf gestossen (5) Die seitlichen Längsseiten werden flach aneinandergestossen.
Fig. 3.) In Nut und Kamm (7) An den seitlichen Längsseiten werden eine (9) resp. zwei (10) kleinere Lamellen befestigt, die sich gegenseitig ergänzen.
Fig. 4.) Ueberlappung (6)

An den seitlichen Längsseiten wird je eine kleinere Lamelle (8) befestigt, jeweils gegenseitig eine oben und auf der anderen Seite eine unten.
Die Elemente (1) werden so versetzt, dass eine Fuge zwischen den Elementen entsteht, damit die auftretenden Querkräfte (Schwinden/Quellen) aufgenommen werden.
Der Vorteil dieser Erfindung ist eine vorgefertigte Massivholz-Elementdecken-Konstruktion, in Trockenbauweise, dessen Eigenschaften statisch und schalltechnisch einer Betondecke annähernd ebenbürtig sind.
Eines der Hauptprobleme im Holzbau ist bei den üblich verwendeten Balkenlagen der Schallschutz. Nur mit aufwendigen und arbeitsintensiven Konstruktionen kann man die geforderten Schallschutzwerte erreichen.
Mit diesen Vollholzbauelementen (1) erreicht man eine Konstruktionshöhe, die einer Betondecke annähernd gleich kommt. Vergleicht man nur die statischen Werte mit einer herkömmlichen Balkenlage, ist bei einer Vollholz-Bauelement-Decke mit einer wesentlich schlankeren Konstruktionshöhe zu rechnen.
Dank der einfachen mechanischen Verbindung (3) der Lamellen (2), ist es möglich diese Elemente (1) ohne grossen Aufwand auch in einem Kleinbetrieb vorzufertigen. Die Vorfertigung in einem Betrieb und die elementweise Montage am Bau, bringen den verarbeitenden Betrieben im Vergleich zu herkömmlichen Deckenkonstruktionen eine wesentliche Reduzierung des Arbeits- und somit des Kostenaufwandes.

## Patentansprüche

1. Massivholzbauelement (1) für die Herstellung von flächigen Konstruktionen, dadurch gekennzeichnet, dass Holzlamellen (2) mechanisch starr miteinander verbunden (3) sind und Mittel (5,6,7) aufweisen, die ein seitliches Aneinanderreihen mehrerer Elemente (2) ermöglichen.

2. Massivholzbauelement (1) nach Anspruch 1, dadurch gekennzeichnet, dass die einzelnen Lamellen (2) mittels mechanischer Verbindung (3) durch Nägel oder Schrauben starr miteinander verbunden sind.

3. Massivholzbauelement (1) nach Anspruch 2, dadurch gekennzeichnet, dass die einzelnen Lamellen (2) Holzbretter sind welche elementlang oder versetzt gestossen (4) sind.

4. Massivholzbauelement (1) nach Anspruch 1, dadurch gekennzeichnet, dass die Mittel (5,7) stumpf gestossen (5), als Nut und Kamm (7) ausgeführt sind.

5. Massivholzbauelemente (1) nach Anspruch 1, dadurch gekennzeichnet, dass die Mittel (6) in einer Lamelle (8), die der halben Höhe der übrigen Lamellen (2) entspricht, bestehen.

6. Massivholzbauelement (1) nach Anspruch 4, dadurch gekennzeichnet, dass Nut und Kamm (7) an den Längsseiten gegenseitig, mittels einer (9) resp. zwei (10) Lammellen, durch Nägel oder Schrauben (3) starr miteinander verbunden sind.

7. Massivholzbauelement (1) nach Anspruch 5, dadurch gekennzeichnet, dass an beiden Längsseiten gegenseitig, je eine Lamelle (8), durch Nägel oder Schrauben (3) starr befestigt ist.
